# EUROPEAN PATENT APPLICATION

(11) **EP 0 591 938 A1**
(43) Date of publication of application: **13.04.1994**
(21) Application number: 93116136.8
(22) Date of filing: 06.10.1993
(51) Int. Cl.: B01J 37/02, B01J 23/74, B01J 35/04

(54) **New supporting material for catalysts and the like for use at high temperatures**

(30) Priority: 08.10.1992 IT RM920730
(71) Applicant: CENTRO SVILUPPO MATERIALI S.p.A., I-00128 Roma (IT)
(72) Inventor: Franzoni, Ugo, I-00143 Rome (IT); Testani, Claudio, I-00040 Pomezia (Prov. of Rome) (IT)
(74) Representative: Gervasi, Gemma, Dr.

(57) **Abstract**

The use of intermetallic thin sheet, e. g. nickel aluminide, as a support for catalysts for treating gases at high temperatures, allows to obtain great advantages.
Particularly as regards the weight of the structure, the dimensional stability and the corrosion resistance of the support of the catalyst.

## Description

### Field of the invention

The present invention relates to a new support for catalysts and the like, for use at high temperature, and more particularly, it refers to the use of aluminide thin sheets as a support for catalysts, e. g. in the field of catalytic converters.

### Prior art

In catalytic treatments of gas, even the aggressive ones, at high temperatures, the support of the catalyst is subjected to extremely severe working conditions, particularly when it is used at very high temperatures, e. g. higer than 600°C, and when for any reason the support is subjected to frequent changes of temperature.

Such conditions can be found in catalytic converters for treatment of exhaust gases in internal combustion engines, particularly for land vehicles, wherein the standard working temperature is about 800°C with peaks up to 1100°C, and there are possible vibrations and mechanical crushing, cutting, bending stresses, even of large entity.

For this reason, from now on reference will be made solely to catalytic converters, even though the present invention can be easily applyed to all those catalytic treatments wherein dimensional stability, mechanical resistance, weight and corrosion resistance of the support for catalyst are particularly relevant.

In catalytic converters, the catalyst is superficially adsorbed as a thin film on a support provided with a great superficial extent and inserted into the body of the converter itself so that the maximum of its surface is licked by the exhaust gases. The characteristics required for such a support are numerous: in particular, besides having a large surface available for use, it must be resistant to high temperature, oxidation, corrosion, changes of temperature, and must be characterized by good mechanical resistance at high temperatures.

At the beginning, ceramics were chosen as a preferred material, which, already employed for similar purposes in chemical industry, certainly possess many of the above mentioned characteristics.

Ceramic bodies are produced having an elongated shape and provided with a great number of ducts through their length, like honeycomb, inside their internal surface a catalyst is deposited; such bodies are then inserted into the converter in order that such ducts be passed through by the exhaust gases. However ceramics exibit some aspects which turn out to be particularly detrimental in this field of application: above all, for reasons of mechanical resistance, it is impossible that such ducts have very thin walls, therefore the number of ducts per unity of surface is quite small and consequently it is necessary to increase the cross section and/or the length of the ceramic body to have the necessary reaction surface with the exhaust gases and not to produce a too high back pressure; it results that such ceramic bodies are more heavy and cumbersome than necessary. It is known that the free cross section of a ceramic core for such uses is about 70% of the total section.

In addition ceramics are characterized by a poor resistance to changes of temperature and are fragile, therefore they are subjected risks of rupture, due to thermic and mechanical stresses caused by the working conditions of vehicles.

Finally, their cumbersome and the unavoidable soiling of the ducts with soot, unburnt hydrocarbons and so on, make it difficult to recycle the catalyst, once it is exhausted.

It has thus been proposed to use a very thin metal sheet (tipically around 5/100 mm) suitably formed and covered with a catalyst adsorbed onto a very thin ceramic coating. In this case, if, on one hand, a body is obtained which is surely resistant to thermal changes and which has a free cross section higher than 90% of the total section, which makes it easier the catalyst recycling, on the other hand corrosion and oxidation resistance are lost, even by using highly alloyed stainless steels, because, owing to the working temperature of the converters, tipically around 800°C, stainless steels are quicly worn out, particularly when in so thin thicknesses.

In addition, at these temperatures mechanical resistance of steels is very low and it is possible that a violent impact or jolt of the vehicle causes the crushing of the package of thin sheets and hence the out of using of the converter.

Finally, the thin sheet of ceramics, supporting the catalyst, does not well adhere to the surface of stainless steels, which hence have to be subjected to an additional treatment for this pourpose, with additional costs.

However the more and more strict laws on pollution make it essential to have catalytic converters technically reliable and long lasting, particularly taking into account that different solutions to the pollution problems due to traffic, like the solely electric traction for vehicles, seem to be at the moment very far from a real applicability.

### Description of the invention

It has now been found that an aluminide thin sheet, particularly nickel aluminide, preferably having a thickness ranging between 0.01 and 0.10 mm is a quite perfect support for a catalyst of reactors treating exhaust gases of internal combustion engines, particularly of road vehicles.

In fact such materials possess good corrosion resistance and mechanical features at high temperatures, they resist very well to hot oxidation and, thanks to the thin sheets of aluminum oxide quickly developed on their surface, they need extremely reduced oxidation times, even up to ten times less with respect to steels employed for similar uses, and they are supplied with a natural anchoring for the ceramic sheet, support of the catalyst.

Aluminides suitably used are the nickel ones, such as NiAl and Ni₃Al, particularly the latter one has a workability comparable to the corresponding one of stainless steels and has other properties, as will be seen in the following.

The metal sheet is obtaned by cold rolling a starting sheet obtained e. g. by strip continuous casting or by quick solidification of a casted liquid metal e. g. according to the melt spinning technique on a rotating cold substratum, or by hot or cold rolling of metal powders.

The oxidized thin sheet then receives a thin ceramic coating, preferably having a thickness ranging between 0.001 and 0.07 mm according to well known techniques.

A thin sheet is corrugated and side by side connected to another flat thin sheet; the thus formed body is finally tightly rolled up in the desired shape, fixed with spot welding and/or through bolts and then inserted in a preformed shell.

Tests carried on by using a thin sheet made of nickel aluminide slightly corrugated and formed as a tighten rolling up, have pointed out the following advantages:
- the production of an alumina sheet by air treating at high temperature, required to link the support of the catalyst, is obtained in much shorter times than for the conventional high cromium steels enriched with aluminum, terefore treatment times are cut of at least 60%;
- said support, complete with catalyst, shows a beginning of detachment from the substrate at a temperature higher than 1350°C, much higher than the maximum of the use temperature of catalytic converters;
- said support is compact, with a porosity and an adhesion to the substrate of at least 50% better than the corresponding ones of substrates of known steels employed for the same uses;
- the mechanical resistance and yield, either at high temperature and at the use temperature, are much higher than the corresponding ones of known steels employed for the same uses.

## Claims

1. Supporting material for a catalyst for use at high temperatures characterized in that it comprises a thin sheet of metallic aluminide.

2. Material according to claim 1 characterized in that the sheet is made of nickel aluminide.

3. Material according to claim 2 characterized in that the sheet is made of nickel aluminide of Ni₃Al type.

4. Material according to claim 2 characterized in that the sheet has a thickness ranging between 0.01 and 0.10 mm.

5. Process for producing catalytic converters for earth vehicles, wherein a body provided with a large number of passing through ducts bears on the internal surface of said ducts a coating of porous ceramics bearing an adsorbed catalyst, characterized in that said body is formed by a thin sheet of metallic aluminide.

6. Process according to claim 4 characterized in that said sheet is made of nickel aluminide having a thickness ranging between 0.01 and 0.10 mm.

7. Process according to claim 5 characterized in that said body is formed by a corrugated sheet, side by side coupled with a substantially flat thin sheet, such combination being tightly rolled up in the desired shape.

8. Use of a thin sheet of metallic aluminide for preparing a support for a catalyst for treating gases at high temperature.

9. Use of a thin sheet according to claim 7 wherein the sheet is made of nickel aluminide and has a thickness ranging between 0.01 and 0.10 mm.
